# EUROPEAN PATENT APPLICATION

(11) **EP 4 779 369 A1**
(43) Date of publication of application: **22.07.2026**
(21) Application number: 24864168.0
(22) Date of filing: 18.06.2024
(51) Int. Cl.: G02B 6/12

(54) **END-FACE COUPLER, PREPARATION METHOD, AND COMMUNICATION SYSTEM**

(30) Priority: 15.09.2023 CN 202311205718
(71) Applicant: Huawei Technologies Co., Ltd., Shenzhen, Guangdong 518129 (CN)
(72) Inventor: MA, Jingyan, Shenzhen, Guangdong 518129 (CN); WANG, Qian, Shenzhen, Guangdong 518129 (CN); XU, Jinbin, Shenzhen, Guangdong 518129 (CN); GUO, Chenxing, Shanghai 200240 (CN); QUAN, Xueling, Shanghai 200240 (CN); CHENG, Xiulan, Shanghai 200240 (CN)
(74) Representative: Thun, Clemens
(86) International application number: PCT/CN2024/099930
(87) International publication number: WO 2025/055443

(57) **Abstract**

Embodiments of this application disclose an edge coupler, a preparation method, and a communication system. The edge coupler includes a substrate, a waveguide structure located on the substrate, and a cladding layer covering the waveguide structure. The waveguide structure includes a gradient index lens, a first waveguide, and a second waveguide. A first side of the gradient index lens is configured to connect to an optical fiber, the first waveguide is in contact with a second side of the gradient index lens, the first waveguide is in contact with the second waveguide, and the second waveguide is configured to connect to an optical waveguide in an optoelectronic chip. Based on this, an end face of the optical fiber may be connected to an end face of the optical waveguide in the optoelectronic chip through the edge coupler. During transmission of an optical signal, a mode spot size of the optical signal may be gradually reduced through the gradient index lens, the first waveguide, and the second waveguide, so that the mode spot size of the optical signal output by the edge coupler can better match a mode spot size in the optical waveguide, thereby reducing a coupling loss of the optical signal from the optical fiber to the optoelectronic chip.

## Description

### CROSS-REFERENCE TO RELATED APPLICATIONS

This application claims priority to Chinese Patent Application No. 202311205718.X, filed with the China National Intellectual Property Administration on September 15, 2023 and entitled "EDGE COUPLER, PREPARATION METHOD, AND COMMUNICATION SYSTEM", which is incorporated herein by reference in its entirety.

### TECHNICAL FIELD

This application relates to the field of optoelectronic device technologies, and in particular, to an edge coupler, a preparation method, and a communication system.

### BACKGROUND

With the rapid development of optical communication technologies, an integration level of optoelectronic devices is increasingly high. In an optical communication system, when light is transmitted in an optical fiber, a size of an end face of the optical fiber is generally several hundred micrometers, and a size of a mode spot in the optical fiber is generally several to a dozen micrometers. When light is transmitted in an optical waveguide in an optoelectronic chip, a size of an end face of the optical waveguide is generally several hundred nanometers, and a size of a mode spot in the optical waveguide is also generally several hundred nanometers. As a result, there is a significant size mismatch between the mode spot in the optical fiber and the mode spot in the optical waveguide. If the optical fiber is directly connected to the optical waveguide, there may be a significant mode field mismatch, resulting in a large coupling loss. Therefore, how to reduce a coupling loss between the optical fiber and the optoelectronic chip is an urgent technical problem to be resolved.

### SUMMARY

Embodiments of this application provide an edge coupler, a preparation method, and a communication system, to reduce a coupling loss between an optical fiber and an optoelectronic chip.

According to a first aspect, an embodiment of this application provides an edge coupler, including a substrate, a waveguide structure located on the substrate, and a cladding layer wrapping the waveguide structure. The waveguide structure includes a gradient index lens, a first waveguide, and a second waveguide. A refractive index of the first waveguide is less than a refractive index of the second waveguide, so that an optical signal in the first waveguide can be coupled to the second waveguide and light leakage can be avoided through the cladding layer. In addition, the gradient index lens has a first side and a second side that are opposite to each other in a first direction, the first side of the gradient index lens is configured to connect to an optical fiber, and the first waveguide is located on the second side of the gradient index lens and is in contact with the second side of the gradient index lens. Based on this, a mode spot size of an optical signal input by the optical fiber can be reduced in a vertical direction (namely, a direction perpendicular to the substrate) through the gradient index lens, and the optical signal can be coupled to the first waveguide. The second waveguide is located on the second side of the gradient index lens and is in contact with the first waveguide, the first waveguide extends along the first direction, and the second waveguide also extends along the first direction. In addition, an area of a cross section of the first waveguide gradually decreases along a direction from the gradient index lens toward the first waveguide. Furthermore, a side that is of the second waveguide and that is away from the gradient index lens is configured to connect to an optical waveguide in an optoelectronic chip, and an area of a cross section of the second waveguide gradually increases along the direction from the gradient index lens toward the first waveguide. Based on this, the mode spot size of the optical signal is reduced in a horizontal direction (the horizontal direction is perpendicular to the vertical direction, and the horizontal direction is perpendicular to the first direction) and the vertical direction through a combination of the first waveguide and the second waveguide, and the optical signal is coupled to the optical waveguide through the second waveguide. In conclusion, the first waveguide is disposed, and the mode spot size of the optical signal output by the gradient index lens is reduced through the first waveguide and then the optical signal is coupled to the second waveguide, so that a coupling loss resulting from directly coupling the optical signal from the gradient index lens to the second waveguide can be reduced. Therefore, during transmission of the optical signal, the mode spot size of the optical signal can be gradually reduced in the horizontal direction and the vertical direction through the gradient index lens, the first waveguide, and the second waveguide. In this way, the mode spot size of the optical signal output by the edge coupler can better match a mode spot size in the optical waveguide, thereby reducing a coupling loss of the optical signal from the optical fiber to the optoelectronic chip.

In some examples, the first waveguide wraps the second waveguide, and a length of the first waveguide in the first direction is the same as a length of the second waveguide in the vertical direction. In other words, an orthographic projection of the first waveguide on the substrate covers an orthographic projection of the second waveguide on the substrate. In this way, the first waveguide and the second waveguide can be combined to reduce the mode spot size of the optical signal in the horizontal direction and the vertical direction respectively. For example, the first waveguide has a first side and a second side that are opposite to each other in the first direction, and the first side of the first waveguide is in contact with the gradient index lens. The second waveguide has a first side and a second side that are opposite to each other in the first direction. Further, the first side of the second waveguide may be aligned with the first side of the first waveguide in the first direction, and the second side of the second waveguide may be aligned with the second side of the first waveguide in the first direction.

In some examples, the second waveguide is located on a side that is of the first waveguide and that is away from the gradient index lens, and the second waveguide is in contact with the side that is of the first waveguide and that is away from the gradient index lens. In other words, an orthographic projection of the first waveguide on the substrate does not overlap an orthographic projection of the second waveguide on the substrate, but the orthographic projection of the first waveguide on the substrate abuts against the orthographic projection of the second waveguide on the substrate. In this way, the mode spot size of the optical signal can be reduced in the horizontal direction through the first waveguide, and then the optical signal can be coupled to the second waveguide. For example, the first side of the second waveguide may further be aligned with the second side of the first waveguide in the first direction.

For further directional transmission of light to the optical waveguide, the waveguide structure further includes a third waveguide extending along the first direction. The third waveguide is in contact with the side that is of the second waveguide and that is away from the gradient index lens, and a side that is of the third waveguide and that is away from the gradient index lens is configured to connect to the optical waveguide in the optoelectronic chip, so that the second waveguide is connected to the optical waveguide through the third waveguide. In addition, an area of a cross section of the third waveguide stays the same along the direction from the gradient index lens toward the first waveguide, so that light output by the second waveguide is directionally transmitted to the optical waveguide through the third waveguide. For example, a refractive index of the third waveguide is the same as the refractive index of the second waveguide, and the cladding layer further wraps the third waveguide, to avoid light leakage from the third waveguide. In addition, the cross section of the third waveguide may further match a size of the optical waveguide in the optoelectronic chip, thereby further improving reliability of transmission of the optical signal.

For further reduction in a transmission loss, the third waveguide also has a first side and a second side that are opposite to each other in the first direction, and a shape of the cross section of the third waveguide stays the same along a direction from the first side of the third waveguide toward the second side of the third waveguide. Moreover, a cross section of the first side of the third waveguide and a cross section of the second side of the second waveguide may further have a same area and a same shape, so that a coupling loss between the second waveguide and the third waveguide is further reduced. In addition, the cross section of the third waveguide and a cross section of the optical waveguide have a same area and a same shape, so that a coupling loss between the third waveguide and the optical waveguide can be further reduced.

In some examples, for further reduction in light leakage, the waveguide structure further includes a fourth waveguide extending along the first direction, and the fourth waveguide is in contact with the side that is of the first waveguide and that is away from the gradient index lens. When the first waveguide wraps the second waveguide, the fourth waveguide wraps the third waveguide. In other words, an orthographic projection of the fourth waveguide on the substrate covers an orthographic projection of the third waveguide on the substrate. This further reduces light leakage. For example, a refractive index of the fourth waveguide is the same as the refractive index of the first waveguide, and the cladding layer further wraps the fourth waveguide. Based on this, light is confined within the third waveguide by using the fourth waveguide and the cladding layer, thereby avoiding light leakage.

In some other examples, for further reduction in light leakage, the waveguide structure further includes a fourth waveguide extending along the first direction, and the fourth waveguide is in contact with the side that is of the first waveguide and that is away from the gradient index lens. When the second waveguide is located on the side that is of the first waveguide and that is away from the gradient index lens, the fourth waveguide wraps the second waveguide and the third waveguide. In other words, an orthographic projection of the fourth waveguide on the substrate covers the orthographic projection of the second waveguide on the substrate and an orthographic projection of the third waveguide on the substrate, thereby further reducing light leakage. For example, a refractive index of the fourth waveguide is the same as the refractive index of the first waveguide, and the cladding layer further wraps the fourth waveguide. Based on this, light is confined within the third waveguide by using the fourth waveguide and the cladding layer, thereby avoiding light leakage.

For example, an area of a cross section of the fourth waveguide stays the same along the direction from the gradient index lens toward the first waveguide.

To reduce a coupling loss of the second waveguide and the third waveguide, the third waveguide and the second waveguide may be made of a same material, and the third waveguide and the second waveguide may be an integrally formed structure. Based on this, the second waveguide and the third waveguide can be formed by using a same patterning process, thereby reducing steps of a preparation process.

To reduce steps of a preparation process, the fourth waveguide and the first waveguide are further made of a same material, and the fourth waveguide and the first waveguide are an integrally formed structure. Based on this, the fourth waveguide and the first waveguide can be formed by using a same patterning process, thereby reducing steps of the preparation process.

In some examples, the first waveguide includes but is not limited to a tapered waveguide, so that the first waveguide may be an upright tapered waveguide.

In some examples, the second waveguide includes but is not limited to a tapered waveguide, so that the second waveguide may be an inverted tapered waveguide.

In some examples, the third waveguide includes but is not limited to a rectangular waveguide.

In some examples, the fourth waveguide includes but is not limited to a rectangular waveguide.

In some examples, the gradient index lens includes a plurality of light-transmitting layers stacked on the substrate, and refractive indexes of the plurality of light-transmitting layers are in descending order along a direction from the substrate toward the gradient index lens. First side faces of the plurality of light-transmitting layers in the first direction are used as the first side of the gradient index lens, and second side faces of the plurality of light-transmitting layers in the first direction are used as the second side of the gradient index lens. In this way, a mode spot size of the optical signal at the end face of the optical fiber can be reduced in the vertical direction.

In addition, the first waveguide is in contact with a second side face of a light-transmitting layer that is in the gradient index lens and that is in contact with the substrate, and the refractive index of the first waveguide is the same as a refractive index of the light-transmitting layer that is in the gradient index lens and that is in contact with the substrate. In this way, the mode spot size of the optical signal at the end face of the optical fiber can be reduced in the vertical direction through the gradient index lens, and the optical signal can be coupled to the first waveguide through the light-transmitting layer in contact with the substrate, thereby reducing the coupling loss.

For example, the first waveguide and the light-transmitting layer that is in the gradient index lens and that is in contact with the substrate are an integrally formed structure and are made of a same material.

To reduce light leakage, the cladding layer further wraps the gradient index lens. In addition, the cladding layer exposes the first side of the gradient index lens, so that the first side of the gradient index lens can be connected to the optical fiber.

Further, thicknesses of the plurality of light-transmitting layers in the vertical direction may be the same or different, to meet a process requirement.

In some examples, a material of the first waveguide includes but is not limited to oxynitride. For example, the material of the first waveguide is silicon oxynitride, so that the first waveguide is an upright tapered silicon oxynitride waveguide.

In some examples, a material of the second waveguide includes but is not limited to silicon, so that the second waveguide is an inverted tapered silicon waveguide.

In some examples, a material of the light-transmitting layers in the gradient index lens includes but is not limited to oxynitride. For example, a material of the light-transmitting layers is silicon oxynitride, so that the gradient index lens is a silicon oxynitride gradient index lens.

In some examples, a material of the cladding layer includes but is not limited to oxide. For example, the material of the cladding layer is silicon dioxide, so that the cladding layer is a silicon dioxide cladding layer.

In a specific implementation, the substrate may include an oxide layer and a semiconductor layer that are stacked, and the waveguide structure and the cladding layer are located on a side that is of the oxide layer and that is away from the semiconductor layer. Alternatively, the substrate may be an oxide layer. In other words, no semiconductor layer is provided. In addition, the oxide layer and the cladding layer may be made of a same material, to avoid light leakage from one side of the substrate.

According to a second aspect, an embodiment of this application further provides a preparation method for an edge coupler, including the following:
forming a second waveguide on a substrate, where the second waveguide extends along a first direction, an area of a cross section of the second waveguide gradually increases along the first direction, the second waveguide is configured to connect to an optical waveguide in an optoelectronic chip, and the first direction is parallel to the substrate;
forming a gradient index lens and a first waveguide on the substrate, where the gradient index lens has a first side and a second side that are opposite to each other in the first direction, the first side of the gradient index lens is configured to connect to an optical fiber, the second waveguide is in contact with the first waveguide, the first waveguide is in contact with the second side of the gradient index lens, the second waveguide extends along the first direction, and an area of a cross section of the second waveguide gradually decreases along the first direction; and
depositing a cladding layer on the substrate, where the cladding layer wraps the gradient index lens, the first waveguide, and the second waveguide.

For further directional transmission of light to the optical waveguide, the preparation method further includes: forming a third waveguide when forming the second waveguide, where the third waveguide extends along the first direction, the third waveguide is in contact with a side that is of the second waveguide and that is away from the gradient index lens, a side that is of the third waveguide and that is away from the gradient index lens is configured to connect to the optical waveguide in the optoelectronic chip, and an area of a cross section of the third waveguide stays the same along a direction from the gradient index lens toward the first waveguide; and the cladding layer further wraps the third waveguide.

For further reduction in light leakage, the preparation method further includes: forming a fourth waveguide when forming the first waveguide, where the fourth waveguide extends along the first direction; the fourth waveguide is in contact with a side that is of the first waveguide and that is away from the gradient index lens; and the fourth waveguide wraps the third waveguide when the first waveguide wraps the second waveguide, or the fourth waveguide wraps the second waveguide and the third waveguide when the second waveguide is located on the side that is of the first waveguide and that is away from the gradient index lens; and the cladding layer further wraps the fourth waveguide.

In a specific implementation, a silicon-on-insulator (Silicon On Insulator, SOI) substrate is used to form the edge coupler. For example, the preparation method includes the following process: providing the SOI substrate, where the SOI substrate includes a base silicon, a buried oxide layer, and a top silicon; and patterning and etching the top silicon to form the second waveguide; and forming the gradient index lens and the first waveguide on the substrate includes the following process: depositing a plurality of silicon oxynitride film layers on the buried oxide layer on which the second waveguide is formed, where refractive indexes of the plurality of silicon oxynitride film layers are in descending order along a direction from the base silicon toward the buried oxide layer; then, patterning and etching a remaining silicon oxynitride film layer among the plurality of silicon oxynitride film layers to form a remaining light-transmitting layer in the gradient index lens, where the remaining silicon oxynitride film layer is a silicon oxynitride film layer among the plurality of silicon oxynitride film layers except a silicon oxynitride film layer in contact with the buried oxide layer; and patterning and etching the silicon oxynitride film layer in contact with the buried oxide layer to form the first waveguide and a light-transmitting layer that is in the gradient index lens and that is in contact with the buried oxide layer.

According to a third aspect, an embodiment of this application further provides a communication system. The communication system includes an optical fiber, an optoelectronic chip, and an edge coupler. An end face of the optical fiber is connected to a first side of a gradient index lens in the edge coupler, and a second side of a second waveguide in the edge coupler is connected to an end face of an optical waveguide in the optoelectronic chip. In this way, a mode spot size at the end face of the optical fiber is reduced through the edge coupler and then coupled to the optical waveguide, thereby reducing a coupling loss. In addition, the edge coupler is the edge coupler according to the first aspect or any of the possible designs of the first aspect. Because the edge coupler has a low coupling loss, the communication system including the edge coupler also has a low coupling loss. In addition, a principle by which the communication system resolves the problem is similar to a principle by which the edge coupler resolves the problem. Therefore, for technical effects of the communication system, refer to the technical effects of the edge coupler. Details are not described again.

### BRIEF DESCRIPTION OF DRAWINGS

FIG. 1 is a diagram of a three-dimensional structure of an edge coupler according to an embodiment of this application;
FIG. 2 is a top view of the structure of the edge coupler in FIG. 1;
FIG. 3 is a sectional view of the structure along a dashed line AA' in FIG. 2;
FIG. 4a to FIG. 4e each are a diagram of a partial structure of an edge coupler according to an embodiment of this application;
FIG. 5a to FIG. 5c each are a diagram of a simulation result according to an embodiment of this application;
FIG. 6 is a flowchart of a preparation method according to an embodiment of this application;
FIG. 7a to FIG. 7e each are a diagram of a structure of an edge coupler in a preparation process according to an embodiment of this application;
FIG. 8 is a diagram of a three-dimensional structure of an edge coupler according to another embodiment of this application;
FIG. 9 is a top view of the structure of the edge coupler in FIG. 8;
FIG. 10 is a sectional view of the structure along a dashed line AA' in FIG. 9;
FIG. 11 is a diagram of a three-dimensional structure of an edge coupler according to another embodiment of this application;
FIG. 12 is a top view of the structure of the edge coupler in FIG. 11;
FIG. 13 is a sectional view of the structure along a dashed line AA' in FIG. 12;
FIG. 14a to FIG. 14c each are a diagram of a simulation result according to another embodiment of this application;
FIG. 15 is a diagram of a three-dimensional structure of an edge coupler according to another embodiment of this application;
FIG. 16 is a top view of the structure of the edge coupler in FIG. 15; and
FIG. 17 is a sectional view of the structure along a dashed line AA' in FIG. 16.

### Reference numerals:

100: substrate; 110: oxide layer; 120: semiconductor layer; 200: gradient index lens; 210/220/230/240/250: light-transmitting layer; 210a/220a/230a/240a/250a: silicon oxynitride film layer; 310: second waveguide; 320: first waveguide; 330: third waveguide; 340: fourth waveguide; 400: cladding layer; 500: optical fiber, X: first direction; Y: horizontal direction; Z: vertical direction; d1/d2/d3/d4: length; h0/h1/h2/h3/h4: thickness; S01/S11/S21/S31/S41: first side; S02/S12/S22/S32/S42: second side; TW: tip width.

### DESCRIPTION OF EMBODIMENTS

To make objectives, technical solutions, and advantages of this application clearer, the following further describes this application in detail with reference to the accompanying drawings. Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. In addition, terms such as "first" and "second" in this specification are merely used for distinction in description, and should not be understood as an indication or implication of relative importance or an indication or implication of a sequence.

Terms used in the following embodiments are merely intended to describe specific embodiments, but are not intended to limit this application. The terms "one", "a", "the", "the foregoing", "this", and "the one" of singular forms used in the specification and the appended claims of this application are also intended to include plural forms such as "one or more", unless otherwise specified in the context clearly.

An edge coupler provided in embodiments of this application is connected between an end face of an optical fiber and an end face of an optical waveguide of an optoelectronic chip, and is configured to: reduce a mode spot size of an optical signal transmitted through the optical fiber, and then couple the optical signal to the optical waveguide. The edge coupler provided in embodiments of this application may be widely used in a communication system that is based on coupling between the optoelectronic chip and the optical fiber, for example, a communication system such as an access network, a transport network, a data center, a router, or the like that requires an optical module. In addition, the optical fiber includes but is not limited to a singlemode optical fiber, and the optoelectronic chip includes but is not limited to a silicon-based optoelectronic chip. It may be understood that the edge coupler in embodiments of this application is intended to include but is not limited to being used in these devices and any other proper type of device.

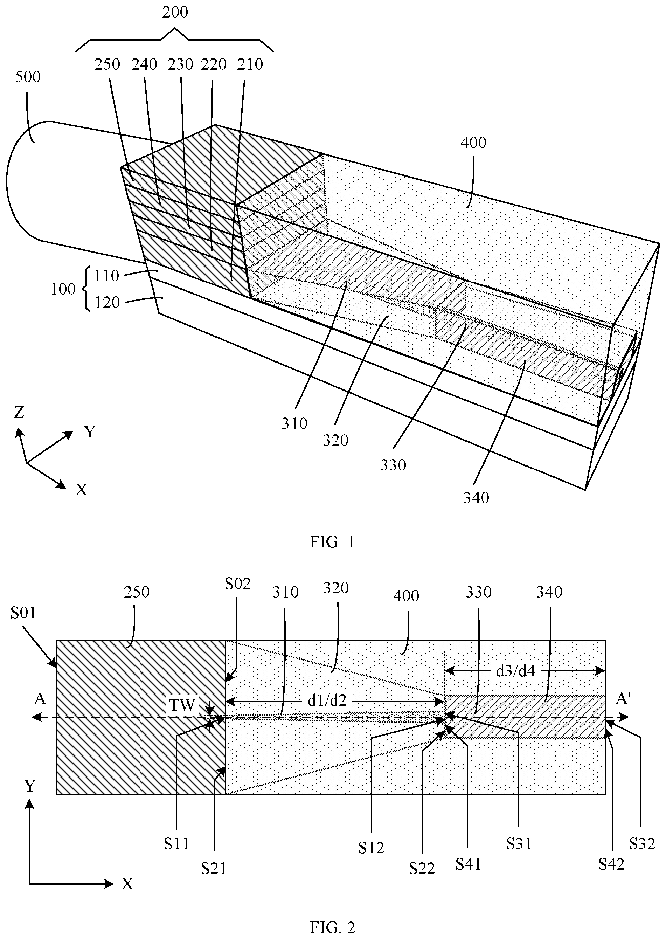

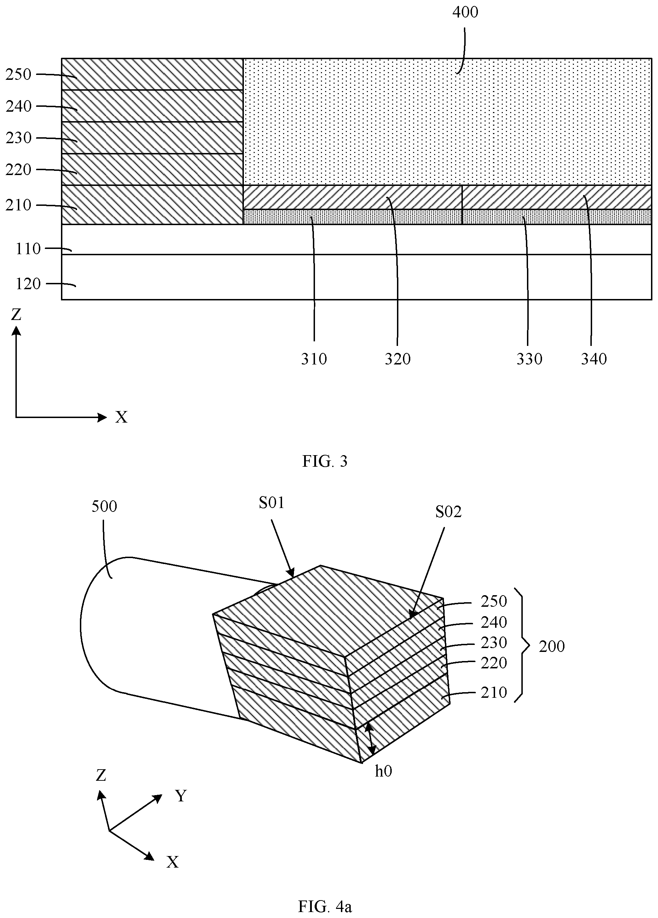

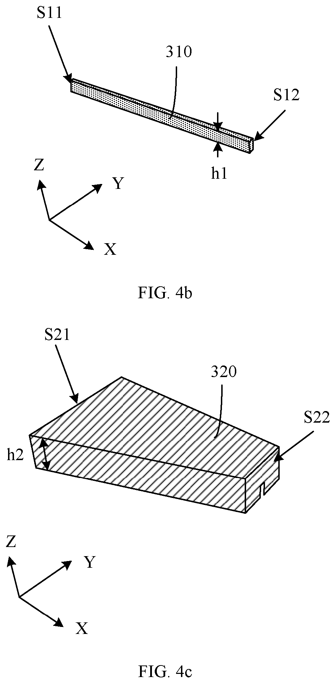

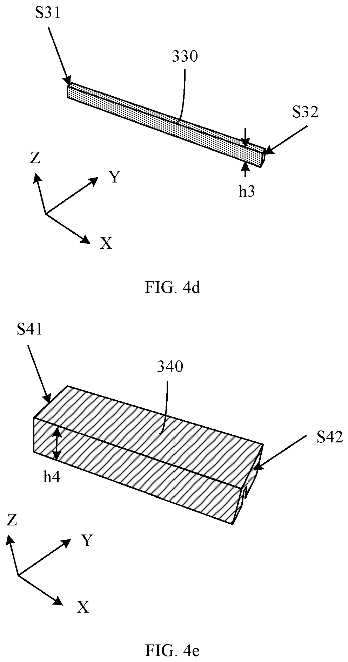

FIG. 1 is a diagram of a three-dimensional structure of an edge coupler according to an embodiment of this application. FIG. 2 is a top view of the structure of the edge coupler in FIG. 1. FIG. 3 is a sectional view of the structure along a dashed line AA' in FIG. 2. FIG. 4a to FIG. 4e each are a diagram of a partial structure of an edge coupler according to an embodiment of this application. With reference to FIG. 1 to FIG. 4e, the edge coupler may include a substrate 100, a waveguide structure located on the substrate 100, and a cladding layer 400 covering the waveguide structure. The waveguide structure includes a gradient index lens (GRIN lens) 200 formed on the substrate 100, a second waveguide 310, and a first waveguide 320. The first waveguide 320 is located on a side that is of the second waveguide 310 and that is away from the substrate 100, and the first waveguide 320 wraps the second waveguide 310. In other words, an orthographic projection of the first waveguide 320 on the substrate 100 covers an orthographic projection of the second waveguide 310 on the substrate 100. The cladding layer 400 is located on a side that is of the first waveguide 320 and that is away from the substrate 100, and the cladding layer 400 wraps the first waveguide 320. In other words, an orthographic projection of the cladding layer 400 on the substrate 100 covers the orthographic projection of the first waveguide 320 on the substrate 100. In addition, a refractive index of the first waveguide 320 is less than a refractive index of the second waveguide 310, so that an optical signal in the first waveguide 320 can be coupled to the second waveguide 310. A refractive index of the cladding layer 400 is less than the refractive index of the first waveguide 320, so that light leakage is avoided through the cladding layer 400. In addition, the gradient index lens 200 has a first side S01 and a second side S02 that are opposite to each other in a first direction X, the second waveguide 310 has a first side S11 and a second side S12 that are opposite to each other in the first direction X, and the first waveguide 320 has a first side S21 and a second side S22 that are opposite to each other in the first direction X. The first side S01 of the gradient index lens 200 is configured to connect to an optical fiber. The first side S21 of the first waveguide 320 is in contact with the second side S02 of the gradient index lens 200. The first waveguide 320 is in contact with the second waveguide 310, and the second side S22 of the second waveguide 310 is configured to connect to an optical waveguide in an optoelectronic chip. Based on this, an optical fiber 500 is connected to an end face of the optical waveguide in the optoelectronic chip through the foregoing edge coupler. To be specific, an end face of the optical fiber 500 is connected to the first side S01 of the gradient index lens 200, and the second side S12 of the second waveguide 310 is connected to the end face of the optical waveguide. During transmission of an optical signal, a mode spot size of the optical signal at the end face of the optical fiber 500 is reduced in a vertical direction Z through the gradient index lens 200, and then the optical signal is coupled to the first waveguide 320 and the second waveguide 310. For the second waveguide 310 and the first waveguide 320, an area of a cross section that is of the first waveguide 320 and that is perpendicular to the first direction X gradually decreases along a direction from the gradient index lens 200 toward the first waveguide 320 (namely, a direction indicated by an arrow of the first direction X), and an area of a cross section that is of the second waveguide 310 and that is perpendicular to the first direction X gradually increases along the direction from the gradient index lens 200 toward the first waveguide 320 (namely, the direction indicated by the arrow of the first direction X). Based on this, the first waveguide 320 and the second waveguide 310 are combined with each other to reduce the mode spot size of the optical signal coupled from the gradient index lens 200 in a horizontal direction Y and the vertical direction Z, and the optical signal is coupled to the optical waveguide through the second waveguide 310. In this way, the mode spot size is reduced, and the optical signal with a reduced mode spot size is coupled to the optical waveguide. In conclusion, the first waveguide 320 is disposed, and a mode spot size of the optical signal output by the gradient index lens 200 is reduced through the first waveguide 320 and then the optical signal is coupled to the second waveguide 310, so that a coupling loss resulting from directly coupling the optical signal from the gradient index lens 200 to the second waveguide 310 can be reduced. Therefore, during transmission of the optical signal, the mode spot size is gradually reduced through the gradient index lens 200, the first waveguide 320, and the second waveguide 310. In this way, the mode spot size of the optical signal output by the edge coupler can better match a mode spot size in the optical waveguide, thereby reducing a coupling loss of the optical signal from the optical fiber to the optoelectronic chip.

In addition, both the first direction X and the horizontal direction Y are parallel to the substrate 100, the first direction X is perpendicular to the horizontal direction Y, and the vertical direction Z is also perpendicular to the first direction X. Further, the vertical direction Z is perpendicular to the substrate 100.

Still with reference to FIG. 1 to FIG. 4e, the orthographic projection of the first waveguide 320 on the substrate 100 may cover the orthographic projection of the second waveguide 310 on the substrate 100. In other words, the first waveguide 320 is located on the side that is of the second waveguide 310 and that is away from the substrate 100, and the first waveguide 320 covers the second waveguide 310. For example, alternatively, the first side S11 of the second waveguide 310 may be aligned with the first side S21 of the first waveguide 320 in the first direction X, and the second side S12 of the second waveguide 310 may be aligned with the second side S22 of the first waveguide 320 in the first direction X. In this way, a length d1 of the second waveguide 310 in the first direction X may be the same as a length d2 of the first waveguide 320 in the first direction X. In addition, the first side S11 and the second side S12 of the second waveguide 310 are parallel, and the first side S21 and the second side S22 of the first waveguide 320 are also parallel.

For further directional transmission of light to the optical waveguide, with reference to FIG. 1 to FIG. 3, FIG. 4b, and FIG. 4d, the waveguide structure further includes a third waveguide 330 extending along the first direction X. A refractive index of the third waveguide 330 is the same as the refractive index of the second waveguide 310. The cladding layer 400 further wraps the third waveguide 330. In other words, the orthographic projection of the cladding layer 400 on the substrate 100 further covers an orthographic projection of the third waveguide 330 on the substrate 100, to avoid light leakage from the third waveguide 330. In addition, the third waveguide 330 has a first side S31 and a second side S32 that are opposite to each other in the first direction X. The first side S31 of the third waveguide 330 is in contact with the second side S12 of the second waveguide 310. In other words, the third waveguide 330 is in contact with a side that is of the second waveguide 310 and that is away from the gradient index lens 200. A side that is of the third waveguide 330 and that is away from the gradient index lens 200 is configured to connect to the optical waveguide in the optoelectronic chip. In other words, the second side S32 of the third waveguide 330 is configured to connect to the optical waveguide in the optoelectronic chip. In addition, the cladding layer 400 exposes the second side S32 of the third waveguide 330, so that the second side S32 of the third waveguide 330 can be connected to the optical waveguide. In this way, the second waveguide 310 can be connected to the optical waveguide through the third waveguide 330, to match a size of the optical waveguide in the optoelectronic chip. In addition, an area of a cross section that is of the third waveguide 330 and that is perpendicular to the first direction X stays the same along the direction from the gradient index lens 200 toward the first waveguide 320 (namely, the direction indicated by the arrow of the first direction X), so that light output by the second waveguide 310 is directionally transmitted to the optical waveguide through the third waveguide 330.

Further, to reduce a transmission loss, a shape of the cross section that is of the third waveguide 330 and that is perpendicular to the first direction X may stay the same along the direction from the gradient index lens 200 toward the first waveguide 320 (namely, the direction indicated by the arrow of the first direction X). A cross section that is of the first side S31 of the third waveguide 330 and that is perpendicular to the first direction X may have a same area and a same shape as a cross section that is of the second side S12 of the second waveguide 310 and that is perpendicular to the first direction X, so that a coupling loss between the second waveguide 310 and the third waveguide 330 is further reduced. In addition, the cross section that is of the third waveguide 330 and that is perpendicular to the first direction X has a same area and a same shape as a cross section that is of the optical waveguide and that is perpendicular to the first direction X, so that a coupling loss between the third waveguide 330 and the optical waveguide can be further reduced. Furthermore, the first side S31 and the second side S32 of the third waveguide 330 are parallel.

For further reduction in light leakage, with reference to FIG. 1 to FIG. 3 and FIG. 4b to FIG. 4e, the edge coupler further includes a fourth waveguide 340 extending along the first direction X. A refractive index of the fourth waveguide 340 is the same as the refractive index of the first waveguide 320. The cladding layer 400 further wraps the fourth waveguide 340. In other words, the orthographic projection of the cladding layer 400 on the substrate 100 further covers an orthographic projection of the fourth waveguide 340 on the substrate 100. The fourth waveguide 340 further wraps the third waveguide 330. In other words, the orthographic projection of the fourth waveguide 340 on the substrate 100 covers the orthographic projection of the third waveguide 330 on the substrate 100. In addition, the fourth waveguide 340 is in contact with the side that is of the first waveguide 320 and that is away from the gradient index lens 200. For example, the fourth waveguide 340 has a first side S41 and a second side S42 that are opposite to each other in the first direction X, and the first side S41 of the fourth waveguide 340 is in contact with the second side S22 of the first waveguide 320. The second side S42 of the fourth waveguide 340 may be aligned with the second side S32 of the third waveguide 330 in the first direction X, and an area of a cross section that is of the fourth waveguide 340 and that is perpendicular to the first direction X stays the same along the direction from the gradient index lens 200 toward the first waveguide 320 (namely, the direction indicated by the arrow of the first direction X). Based on this, light is confined within the third waveguide 330 by using the fourth waveguide 340, thereby avoiding light leakage. In addition, a cross section that is of the first side S41 of the fourth waveguide 340 and that is perpendicular to the first direction X has a same area and a same shape as a cross section that is of the second side S22 of the first waveguide 320 and that is perpendicular to the first direction X. Further, a shape of the cross section that is of the fourth waveguide 340 and that is perpendicular to the first direction X may stay the same along a direction from the first side S41 of the fourth waveguide 340 toward the second side S42 of the fourth waveguide 340 (namely, the direction indicated by the arrow of the first direction X).

Still with reference to FIG. 1 and FIG. 2, the second side S12 of the second waveguide 310, the second side S22 of the first waveguide 320, the first side S31 of the third waveguide 330, and the first side S41 of the fourth waveguide 340 are further aligned in the first direction X, and the second side S32 of the third waveguide 330 is aligned with the second side S42 of the fourth waveguide 340 in the first direction X, so that a length d3 of the third waveguide 330 in the first direction X is the same as a length d4 of the fourth waveguide 340 in the first direction X. This further avoids light leakage.

Still with reference to FIG. 1 and FIG. 2, the edge coupler has a center line (for example, the dashed line AA') extending along the first direction X, and an orthographic projection of the gradient index lens 200 on the substrate 100 may be symmetric with respect to the dashed line AA'. For example, the gradient index lens 200 includes light-transmitting layers 210 to 250 stacked on the substrate 100, and a refractive index n₂₁₀ of the light-transmitting layer 210, a refractive index n₂₂₀ of the light-transmitting layer 220, a refractive index n₂₃₀ of the light-transmitting layer 230, a refractive index n₂₄₀ of the light-transmitting layer 240, and a refractive index n₂₅₀ of the light-transmitting layer 250 are in descending order in a direction from the substrate 100 toward the gradient index lens 200 (namely, a direction indicated by an arrow of the vertical direction Z). In other words, n₂₁₀ > n₂₂₀ > n₂₃₀ > n₂₄₀ > n₂₅₀. In addition, first side faces of the light-transmitting layers 210 to 250 in the first direction X are used as the first side S01 of the gradient index lens 200, and second side faces of the light-transmitting layers 210 to 250 in the first direction X are used as the second side S02 of the gradient index lens 200. In addition, the first side S21 of the first waveguide 320 is in contact with the second side face of the light-transmitting layer 210 that is in the gradient index lens 200 and that is in contact with the substrate 100, and the refractive index of the first waveguide 320 is the same as the refractive index of the light-transmitting layer 210 in contact. In this way, the mode spot size of the optical signal at the end face of the optical fiber can be reduced in the vertical direction Z through the light-transmitting layers 210 to 250, and the optical signal can be coupled to the first waveguide 320 through the light-transmitting layer 210, thereby reducing the coupling loss.

Further, thicknesses of the light-transmitting layers 210 to 250 in the vertical direction Z may be the same or different, to meet a process requirement. In addition, a material of the light-transmitting layers is not limited in this application. Optionally, the material of the light-transmitting layers includes oxynitride. For example, the material of the light-transmitting layers is silicon oxynitride, so that the gradient index lens is a silicon oxynitride gradient index lens. It may be understood that, in this application, an example in which the gradient index lens 200 has five light-transmitting layers is used for illustration. In actual application, a specific quantity of light-transmitting layers in the gradient index lens 200 may be determined based on an actual application requirement, to meet a process requirement.

Still with reference to FIG. 1 and FIG. 2, the orthographic projection of the second waveguide 310 on the substrate 100 may be symmetric with respect to the dashed line AA'. For example, the second waveguide 310 includes but is not limited to a tapered waveguide. In addition, a material of the second waveguide 310 is not limited in this application. For example, the material of the second waveguide 310 includes silicon, so that the second waveguide 310 is an inverted tapered silicon waveguide.

Still with reference to FIG. 1 and FIG. 2, the orthographic projection of the third waveguide 330 on the substrate 100 may be symmetric with respect to the dashed line AA'. For example, the third waveguide 330 includes but is not limited to a rectangular waveguide. In addition, a material of the third waveguide 330 is not limited in this application. Further, the third waveguide 330 and the second waveguide 310 may be made of a same material. In other words, the material of the third waveguide 330 includes silicon, so that the third waveguide 330 is a rectangular silicon waveguide.

For example, the third waveguide 330 and the second waveguide 310 are configured as an integrally formed structure, and the third waveguide 330 and the second waveguide 310 are made of a same material. In this way, the third waveguide 330 and the second waveguide 310 are disposed at a same layer, so that a thickness h1 of the second waveguide 310 in the vertical direction Z can be the same as a thickness h3 of the third waveguide 330 in the vertical direction Z, thereby further reducing a coupling loss resulting from coupling the optical signal from the second waveguide 310 to the third waveguide 330. In addition, the second waveguide 310 and the third waveguide 330 can be prepared by using a same patterning process, thereby reducing steps of a preparation process.

Still with reference to FIG. 1 and FIG. 2, the orthographic projection of the first waveguide 320 on the substrate 100 may be symmetric with respect to the dashed line AA'. For example, the first waveguide 320 includes but is not limited to a tapered waveguide. In addition, a material of the first waveguide 320 is not limited in this application. For example, the material of the first waveguide 320 includes oxynitride. For example, the material of the first waveguide 320 is silicon oxynitride, so that the first waveguide 320 is an upright tapered silicon oxynitride waveguide.

Further, the first waveguide 320 and the light-transmitting layer in the gradient index lens 200 are made of a same material, to reduce a coupling loss resulting from coupling light from the light-transmitting layers to the first waveguide 320. In addition, the first waveguide 320 and the light-transmitting layer 210 that is in the gradient index lens 200 and that is in contact with the substrate 100 are an integrally formed structure. Therefore, the first waveguide 320 and the light-transmitting layer 210 can be prepared by using a same patterning process, thereby reducing steps of a preparation process.

Still with reference to FIG. 1 and FIG. 2, the orthographic projection of the fourth waveguide 340 on the substrate 100 may be symmetric with respect to the dashed line AA'. For example, the fourth waveguide 340 includes but is not limited to a rectangular waveguide. In addition, a material of the fourth waveguide 340 is not limited in this application. Optionally, the material of the fourth waveguide 340 includes oxynitride. For example, the material of the fourth waveguide 340 is silicon oxynitride, so that the fourth waveguide 340 is a rectangular silicon oxynitride waveguide.

Further, the first waveguide 320, the fourth waveguide 340, and the light-transmitting layer 210 are made of a same material, and the first waveguide 320, the fourth waveguide 340, and the light-transmitting layer 210 are an integrally formed structure, so that a thickness h2 of the first waveguide 320 in the vertical direction Z, a thickness h4 of the fourth waveguide 340 in the vertical direction Z, and a thickness h0 of the light-transmitting layer 210 in the vertical direction Z are the same. Therefore, the first waveguide 320, the fourth waveguide 340, and the light-transmitting layer 210 can be prepared and formed by using a same patterning process, thereby reducing steps of a preparation process.

It may be understood that, in FIG. 1 and FIG. 2 of this application, an example in which the cladding layer 400 wraps the second side faces of the light-transmitting layers 220 to 250 in the gradient index lens 200 is used for illustration. In actual application, the orthographic projection of the cladding layer 400 on the substrate 100 may further cover the orthographic projection of the gradient index lens 200 on the substrate. In other words, the cladding layer 400 further wraps an upper surface that is of the gradient index lens 200 and that is away from the substrate 100, and two side faces of the gradient index lens 200 in the horizontal direction Y. In addition, the cladding layer 400 exposes the first side S01 of the gradient index lens 200, so that the first side S01 of the gradient index lens 200 can be connected to the optical fiber. In addition, a material of the cladding layer 400 is not limited in this application. For example, the material of the cladding layer 400 includes but is not limited to oxide. For example, the material of the cladding layer is silicon dioxide, so that the cladding layer is a silicon dioxide cladding layer.

Still with reference to FIG. 1 and FIG. 2, the substrate 100 includes an oxide layer 110 and a semiconductor layer 120 that are stacked, and the gradient index lens 200, the second waveguide 310, the first waveguide 320, the third waveguide 330, the fourth waveguide 340, and the cladding layer 400 are located on a side that is of the oxide layer 110 and that is away from the semiconductor layer 120. Alternatively, the substrate 100 may be an oxide layer. In other words, no semiconductor layer is provided. In addition, the oxide layer 110 and the cladding layer 400 may be made of a same material, to avoid light leakage from one side of the substrate 100.

In this application, simulation is performed by using, as an example, the structure of the edge coupler shown in FIG. 1 and the mode spot size of the optical signal at the end face of the optical fiber 500 being 10 micrometers. It may be learned from simulation that, the mode spot size can be reduced from 10 micrometers to several micrometers (for example, 3 micrometers) in the vertical direction Z through the gradient index lens 200, the mode spot size is not reduced in the horizontal direction Y, and the optical signal with the reduced spot size is coupled to the first waveguide 320 and the second waveguide 310 through the light-transmitting layer 210. The first waveguide 320 and the second waveguide 310 are combined with each other to reduce the mode spot size of the optical signal to several hundred nanometers (for example, 300 nanometers) in the horizontal direction Y and the vertical direction Z respectively, and transmit the optical signal to the optical waveguide through the third waveguide 330. Based on this, a conversion process in which the mode spot size is reduced from 10 micrometers to several hundred nanometers can be implemented.

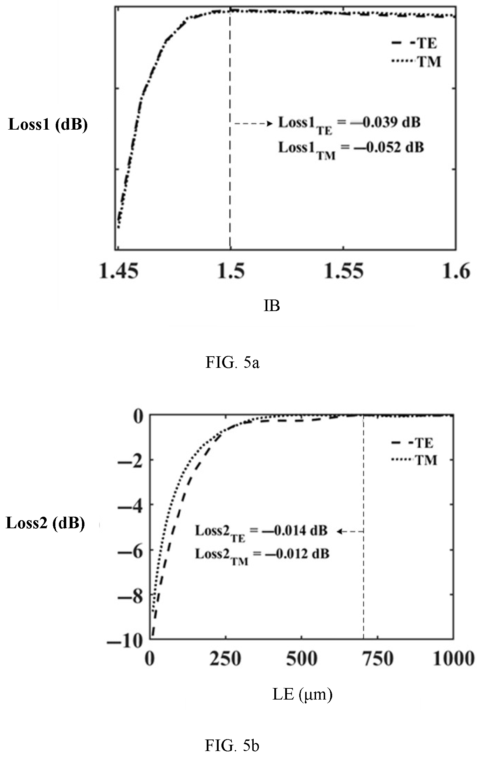

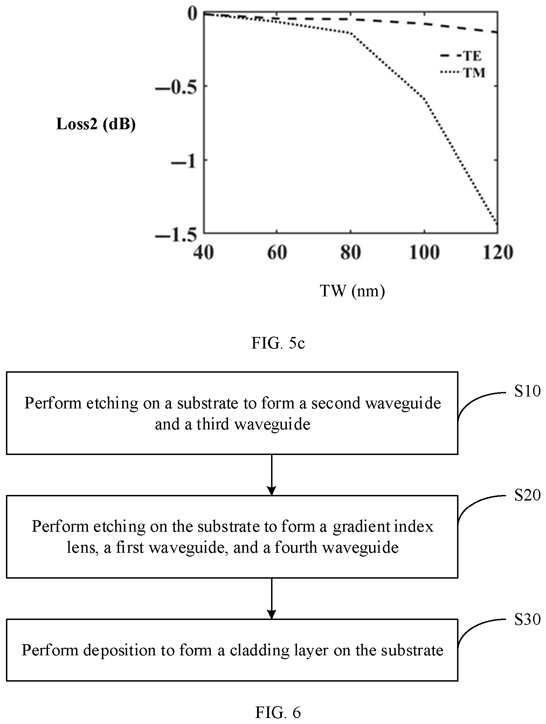

In this application, a coupling loss of the edge coupler is further simulated by using, as an example, the structure of the edge coupler shown in FIG. 1, the materials of the second waveguide 310 and the third waveguide 330 being silicon, and the materials of the light-transmitting layers, the first waveguide 320, and the fourth waveguide 340 being silicon oxynitride. The coupling loss of the edge coupler mainly includes a first loss Loss1 and a second loss Loss2. The first loss Loss1 represents a total loss of the optical signal from the optical fiber, through focusing by the gradient index lens 200, to the first waveguide 320 (the total loss mainly includes a Fresnel reflection loss between the optical fiber and the gradient index lens 200, a mode spot size conversion loss of the gradient index lens 200, and a Fresnel reflection loss between the gradient index lens 200, the first waveguide 320, and the cladding layer 400). The second loss Loss2 represents a transmission loss of the optical signal from the first waveguide 320 to the third waveguide 330. Intrinsic transmission losses of each structure include a material absorption loss, a scattering loss caused by side wall roughness, a radiation loss caused by waveguide bending, and the like. Due to a material property and a limitation of simulation, the transmission loss may be ignored. A key influencing factor of the first loss Loss1 is performance of the gradient index lens 200. Based on this, a physical model of the edge coupler is established in a 2D FDTD module of simulation software for simulation, and a curve of impact of a refractive index change of the light-transmitting layer that is in the gradient index lens 200 and that is in contact with the substrate 100 on the first loss Loss1 is obtained, as shown in FIG. 5a. A horizontal axis IB represents a refractive index of the light-transmitting layer that is in the gradient index lens 200 and that is in contact with the substrate 100, a vertical axis Loss1 represents the first loss, and different line types represent a first loss Loss1_{TE} for a TE mode and a first loss Loss1_{TM} for a TM mode. With reference to FIG. 5a, when IB = 1.5, Loss1_{TE} = -0.039 dB, and Loss1_{TM} = -0.052 dB. Key influencing factors of the second loss Loss2 are the length d1 of the second waveguide 310, the length d2 (d1 = d2) of the first waveguide 320, and a tip width TW of the second waveguide 310. Based on this, a physical model of the edge coupler is established in a MODE module of the simulation software for simulation, and a curve of impact of the length d1 of the second waveguide 310 and the length d2 of the first waveguide 320 on the second loss Loss2 is obtained, as shown in FIG. 5b. A horizontal axis LE represents the length d1 of the second waveguide 310 and the length d2 of the first waveguide 320, a vertical axis Loss2 represents the second loss, and different line types represent a second loss Loss2_{TE} for the TE mode and a second loss Loss2_{TM} for the TM mode. With reference to FIG. 5b, when d1 = d2 = 700 µm, Loss2_{TE} = -0.014 dB, and Loss2_{TM} = -0.012 dB. In addition, using d1 = d2 = 700 µm as an example, the second loss Loss2 is further optimized by changing the tip width TW of the second waveguide 310. As shown in FIG. 5c, a horizontal axis TW represents the tip width of the second waveguide 310, a vertical axis Loss2 represents the second loss, and different line types represent a second loss Loss2_{TE} for the TE mode and a second loss Loss2_{TM} for the TM mode. When the tip width TW of the second waveguide 310 is 40 nm, Loss2_{TE} and Loss2_{TM} are minimum and approximate to 0. In conclusion, it is obtained through simulation that the coupling loss that is of the edge coupler and that corresponds to the TE mode is Loss_{TE} = Loss1_{TE} + Loss2_{TE} = -0.053 dB, and the coupling loss that is of the edge coupler and that corresponds to the TM mode is Loss_{TM} = Loss1_{TM} + Loss2_{TM} = -0.064dB. It may be understood that, when IB = 1.5, d1 (or d2) = 700 µm, and the tip width TW of the second waveguide 310 = 40 nm, a corresponding coupling loss is a minimum loss of the current structure.

FIG. 6 is a flowchart of a preparation method according to an embodiment of this application. With reference to FIG. 6, the preparation method may include the following steps:
S10: Perform etching on a substrate to form a second waveguide and a third waveguide.

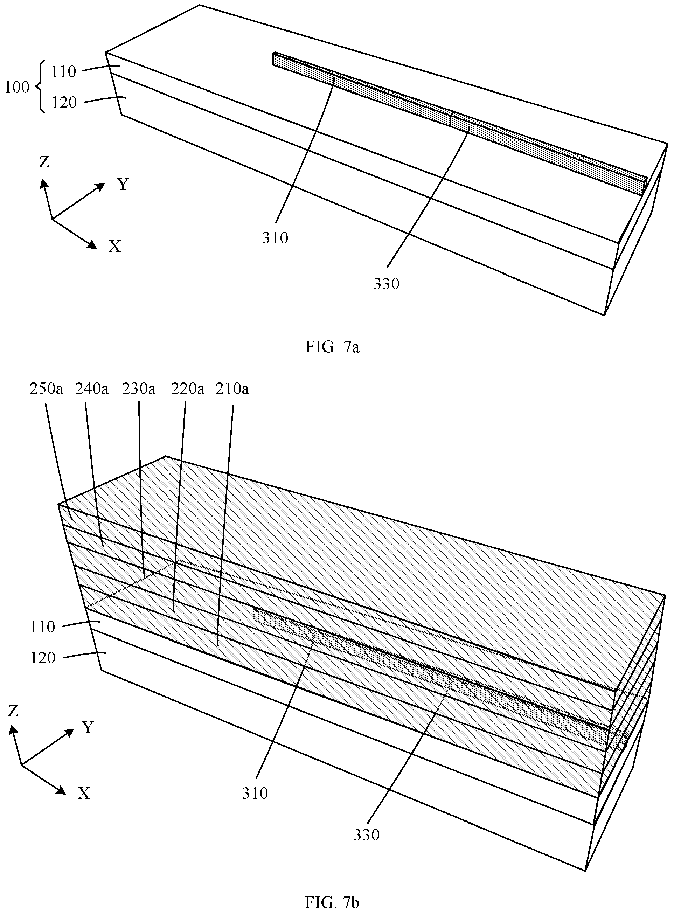

Using the structure of the edge coupler shown in FIG. 2 as an example, step S10 may include the following process: with reference to FIG. 7a, using a silicon-on-insulator (Silicon-On-Insulator, SOI) substrate 100, where the SOI substrate 100 includes a base silicon, a buried oxide layer, and a top silicon; and patterning and etching the top silicon to form a second waveguide 310 and a third waveguide 330, so that the buried oxide layer is used as an oxide layer 110 of the substrate 100 in the edge coupler, and the base silicon is used as a semiconductor layer 120 of the substrate 100 in the edge coupler; or epitaxially growing a semiconductor layer, an oxide layer, and a silicon layer in sequence, and patterning and etching the silicon layer to form the second waveguide and third waveguide.

S20: Perform etching on the substrate to form a gradient index lens, a first waveguide, and a fourth waveguide.

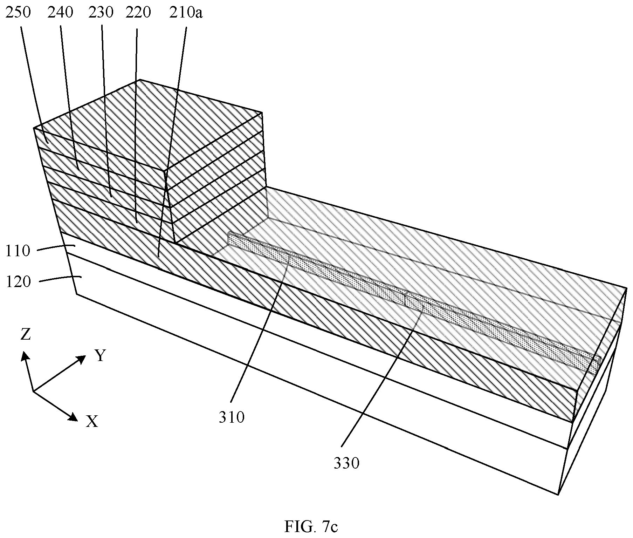

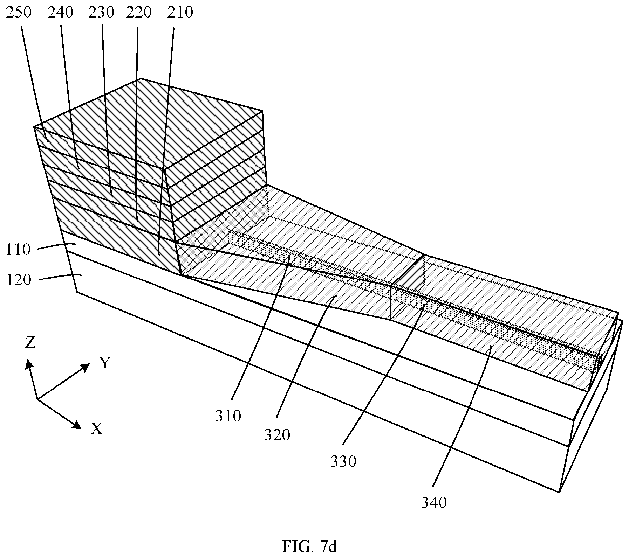

Using the structure of the edge coupler shown in FIG. 2 as an example, step S20 may include the following process: first, with reference to FIG. 7b, depositing five silicon oxynitride film layers 210a to 250a on the oxide layer 110, and adjusting refractive indexes and thicknesses of the five silicon oxynitride film layers 210a to 250a, so that the refractive indexes and thicknesses of the five silicon oxynitride film layers 210a to 250a meet process requirements; then, with reference to FIG. 7c, patterning and etching the silicon oxynitride film layers 220a to 250a to form light-transmitting layers 220 to 250 in the gradient index lens 200; and then, with reference to FIG. 7d, patterning and etching the silicon oxynitride film layer 210a to form a light-transmitting layer 210 in the gradient index lens 200, the first waveguide 320, and the fourth waveguide 340, causing the first waveguide 320 to cover the second waveguide 310, and causing the fourth waveguide 340 to cover the first waveguide 320.

S30: Performing deposition to form a cladding layer on the substrate.

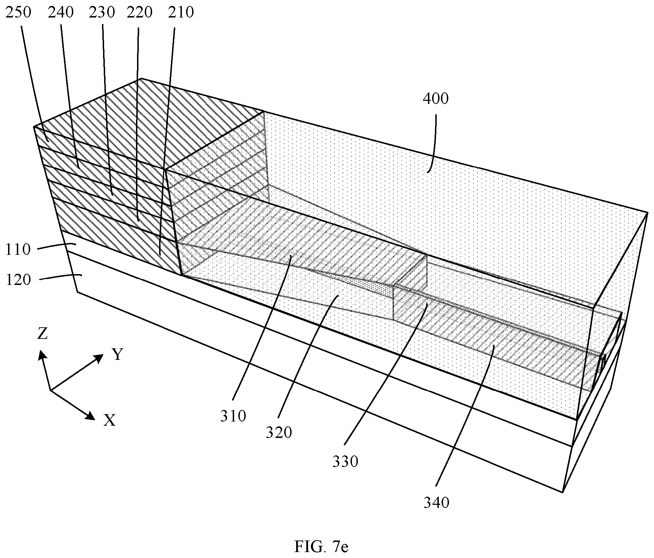

Using the structure of the edge coupler shown in FIG. 2 as an example, step S30 may include the following process: with reference to FIG. 7e, depositing a silicon dioxide cladding layer 400 on the substrate 100, and causing the silicon dioxide cladding layer 400 to cover the first waveguide 320, the fourth waveguide 340, and side faces of the light-transmitting layers 220 to 250. For example, the cladding layer 400 is further in contact with second side faces of the light-transmitting layers 220 to 250 in the gradient index lens 200, to further avoid light leakage. Further, an orthographic projection of the cladding layer 400 on the substrate 100 covers an orthographic projection of the gradient index lens 200 on the substrate. In other words, the cladding layer 400 further covers an upper surface that is of the gradient index lens 200 and that is away from the substrate 100, and two side faces of the gradient index lens 200 in the horizontal direction Y. In addition, the cladding layer 400 exposes a first side S01 of the gradient index lens 200, so that the first side S01 of the gradient index lens 200 can be connected to the optical fiber. In addition, a material of the cladding layer 400 is not limited in this application. For example, the material of the cladding layer 400 includes but is not limited to oxide (for example, silicon dioxide).

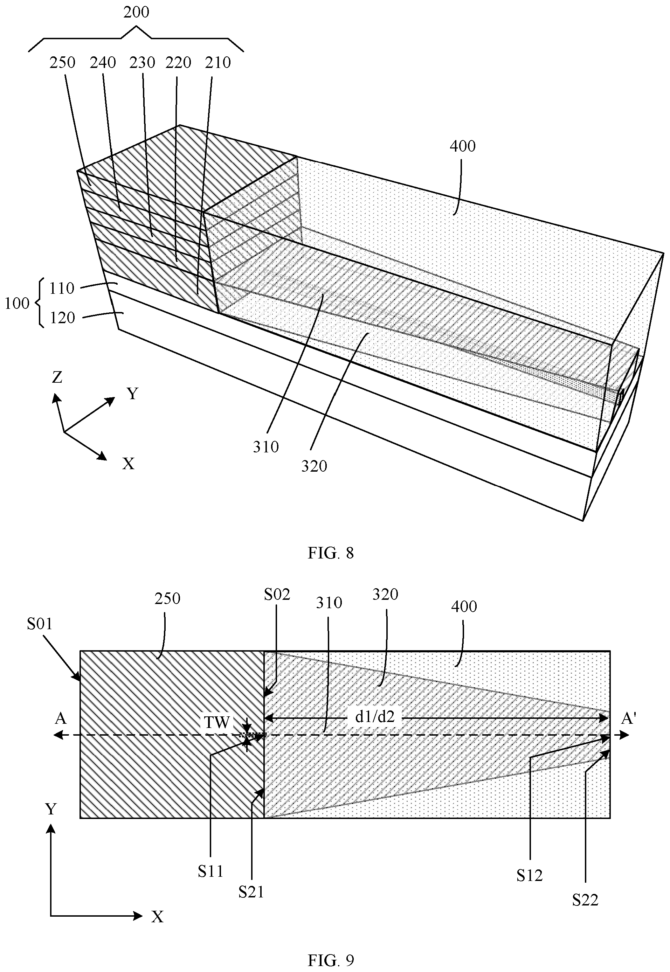

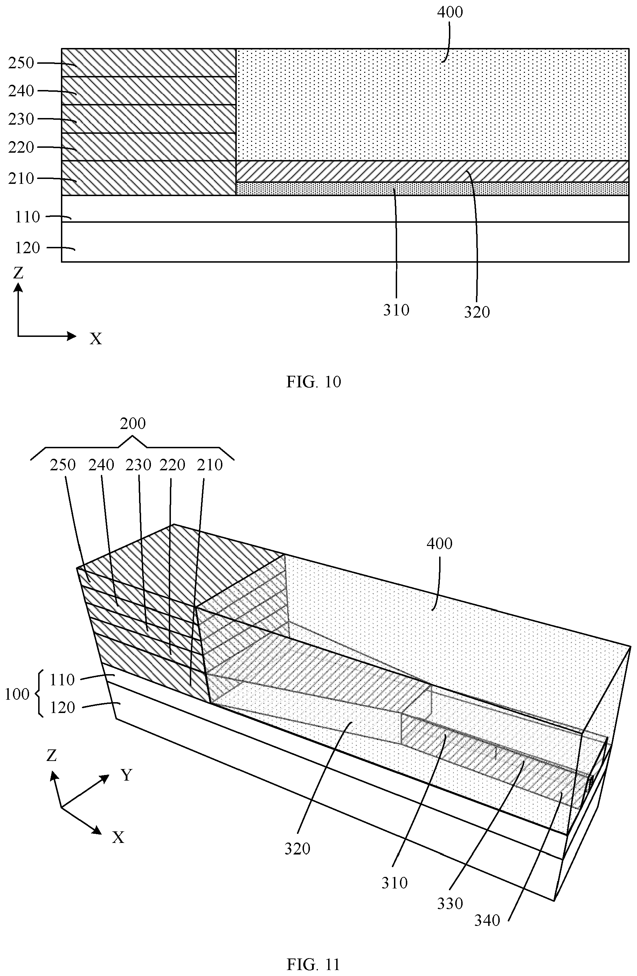

FIG. 8 is a diagram of a three-dimensional structure of an edge coupler according to another embodiment of this application. FIG. 9 is a top view of the structure of the edge coupler in FIG. 8. FIG. 10 is a sectional view of the structure along a dashed line AA' in FIG. 9. With reference to FIG. 8 to FIG. 10, the edge coupler may include a substrate 100, a gradient index lens 200 located on the substrate 100, a second waveguide 310, a first waveguide 320, and a cladding layer 400. A difference between this embodiment and the embodiment shown in FIG. 1 lies in that a third waveguide 330 and a fourth waveguide 340 are not provided in this embodiment. In other words, a second side S12 of the second waveguide 310 is directly connected to an optical waveguide in an optoelectronic chip, so that light is directly coupled to the optical waveguide from the second waveguide 310. Other content in this embodiment may be basically the same as content in the embodiment shown in FIG. 1. Details are not described herein.

The structure of the edge coupler shown in FIG. 8 is used as an example. For a flowchart of a corresponding preparation method, refer to FIG. 6. In step S10, the third waveguide 330 does not need to be formed by etching, and in step S20, the fourth waveguide 340 does not need to be formed by etching. For remaining preparation processes, refer to descriptions of the foregoing preparation method. Details are not described herein.

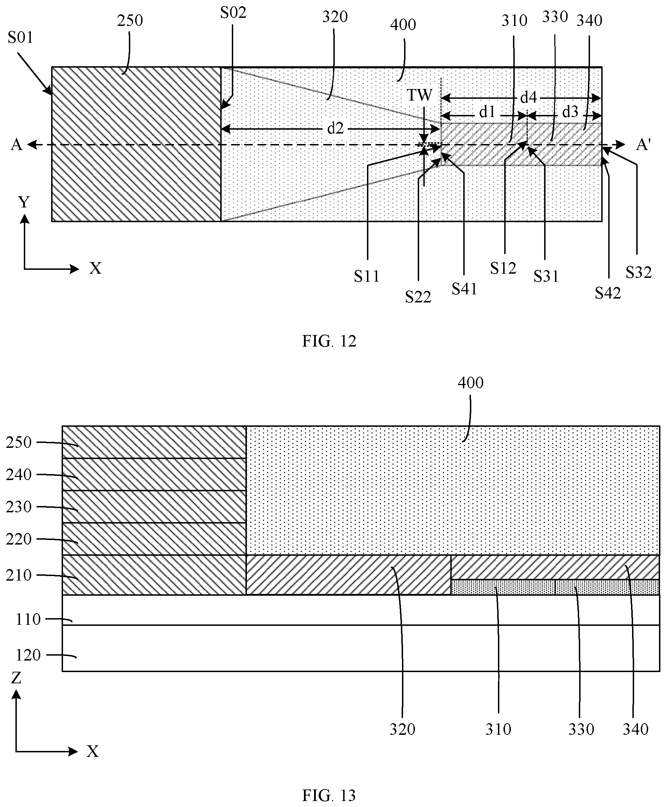

FIG. 11 is a diagram of a three-dimensional structure of an edge coupler according to another embodiment of this application. FIG. 12 is a top view of the structure of the edge coupler in FIG. 11. FIG. 13 is a sectional view of the structure along a dashed line AA' in FIG. 12. With reference to FIG. 11 to FIG. 13, the edge coupler may include a substrate 100, a gradient index lens 200 located on the substrate 100, a second waveguide 310, a first waveguide 320, a third waveguide 330, a fourth waveguide 340, and a cladding layer 400. The second waveguide 310 is located on a side that is of the first waveguide 320 and that is away from the gradient index lens 200, and the second waveguide 310 is in contact with the side that is of the first waveguide 320 and that is away from the gradient index lens 200. In other words, an orthographic projection of the first waveguide 320 on the substrate 100 does not overlap an orthographic projection of the second waveguide 310 on the substrate 100, and a first side S11 of the second waveguide 310 is in contact with a second side S22 of the first waveguide 320, so that the orthographic projection of the first waveguide 320 on the substrate 100 is located between the orthographic projection of the second waveguide 310 on the substrate 100 and the gradient index lens 200. In this way, the mode spot size of the optical signal can be first reduced in the horizontal direction Y through the first waveguide 320, and then the optical signal can be coupled to the second waveguide 310. In addition, the fourth waveguide 340 wraps the second waveguide 310 and the third waveguide 330. In other words, an orthographic projection of the fourth waveguide 340 on the substrate 100 covers the orthographic projection of the second waveguide 310 on the substrate 100 and an orthographic projection of the third waveguide 330 on the substrate 100. Therefore, light leakage from the second waveguide 310 and the third waveguide 330 is avoided by using the fourth waveguide 340. The first side S11 of the second waveguide 310, the second side S22 of the first waveguide 320, and a first side S41 of the fourth waveguide 340 are further aligned in a first direction X, and a second side S32 of the third waveguide 330 is aligned with a second side S42 of the fourth waveguide 340 in the first direction X. In addition, a sum of a length d1 of the second waveguide 310 and a length d3 of the third waveguide 330 may be the same as a length d4 of the fourth waveguide 340. Other content in this embodiment may be basically the same as content in the embodiment shown in FIG. 1. Details are not described herein.

The structure of the edge coupler shown in FIG. 11 is used as an example. For a flowchart of a corresponding preparation method, refer to FIG. 6. In step S20, the second waveguide 310 and the first waveguide 320 that are formed by etching need to be provided between an oxide layer 110 and the fourth waveguide 340, and the fourth waveguide 340 needs to be caused to cover the second waveguide 310 and the first waveguide 320. For remaining preparation processes, refer to descriptions of the foregoing preparation method. Details are not described herein.

In this application, simulation is performed by using, as an example, the structure of the edge coupler shown in FIG. 11 and a mode spot size of an optical signal at an end face of an optical fiber 500 being 10 micrometers. It may be learned from simulation that, the mode spot size can be reduced from 10 micrometers to several micrometers (for example, 3 micrometers) in a vertical direction Z through the gradient index lens 200, the mode spot size is not reduced in a horizontal direction Y, and the optical signal with the reduced mode size is coupled to the first waveguide 320 through a light-transmitting layer 210. The first waveguide 320 may reduce the mode spot size of the optical signal from 10 micrometers to several micrometers (for example, 3 micrometers) in the horizontal direction Y, and the mode spot size of the optical signal is not reduced in the vertical direction Z, and the optical signal is coupled to the second waveguide 310. In this case, the mode spot size of light coupled to the second waveguide 310 is approximately several micrometers (for example, 3 micrometers) in the vertical direction Z, and is also approximately several micrometers (for example, 3 micrometers) in the horizontal direction Y. The second waveguide 310 may reduce the mode spot size of the input light from several micrometers to several hundred nanometers (for example, 300 nanometers) both in the horizontal direction Y and in the vertical direction Z, and the light may be coupled to the optical waveguide. Based on this, a conversion process in which the mode spot size is reduced from 10 micrometers to several hundred nanometers can be implemented.

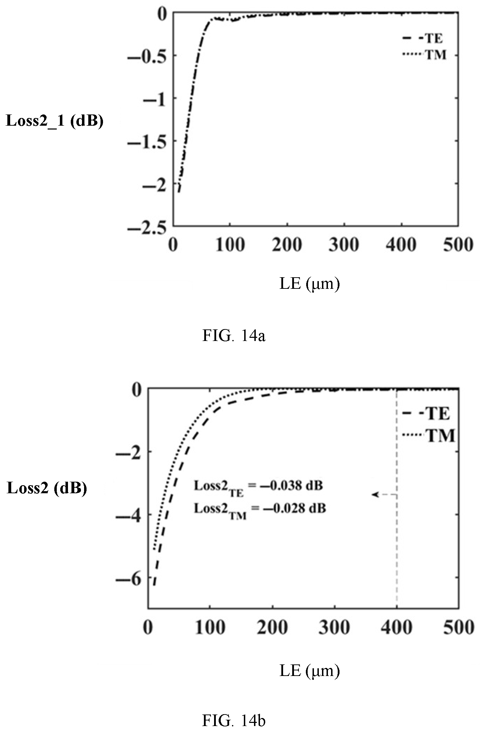

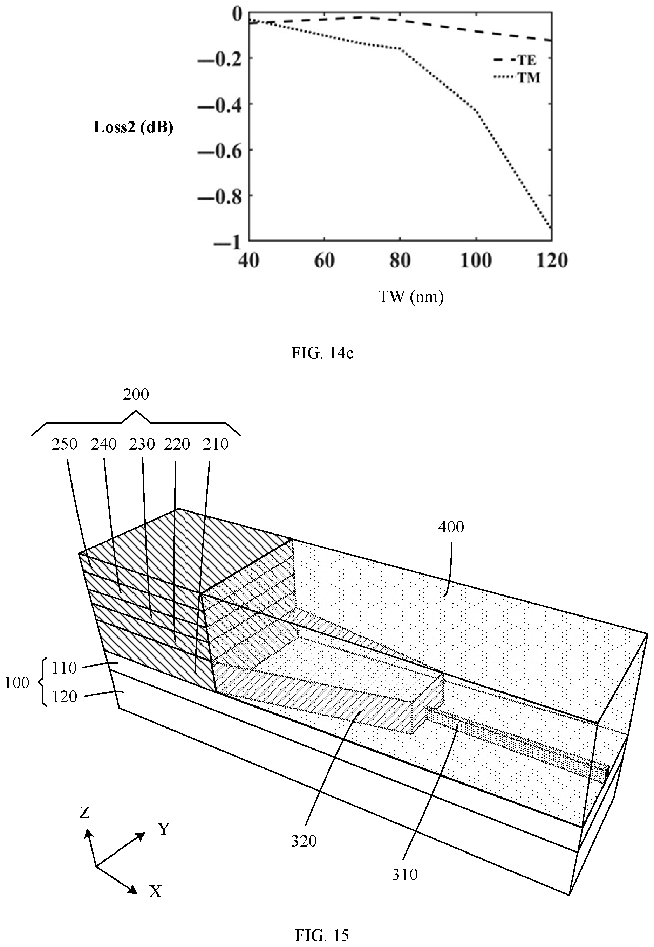

In this application, a coupling loss of the edge coupler is further simulated by using, as an example, the structure of the edge coupler shown in FIG. 11, materials of the second waveguide 310 and the third waveguide 330 being silicon, and materials of light-transmitting layers, the first waveguide 320, and the fourth waveguide 340 being silicon oxynitride. For a first loss Loss1, with reference to FIG. 5a, when IB = 1.5, Loss1_{TE} = -0.039 dB, and Loss1_{TM} = -0.052 dB. For a second loss Loss2, a physical model of the edge coupler is established in a MODE module of simulation software for simulation, and a curve of impact of a length d2 of the first waveguide 320 on a transmission loss of the first waveguide is obtained, as shown in FIG. 14a. A horizontal axis LE represents the length d2 of the first waveguide 320, a vertical axis Loss2_1 represents the transmission loss of the first waveguide, and different line types represent a transmission loss Loss2_1_{1E} of the first waveguide for a TE mode and a transmission loss Loss2_1_{TM} of the first waveguide for a TM mode. Based on FIG. 14a, d2 may be set to 300 µm, and a tip width TW = 40 nm is given for simulation to obtain a curve of impact of a length d1 of the second waveguide 310 on the second loss. As shown in FIG. 14b, a horizontal axis LE represents the length d1 of the second waveguide 310, a vertical axis Loss2 represents the second loss, and different line types represent a second loss Loss2_{TE} for the TE mode and a second loss Loss2_{TM} for the TM mode. With reference to FIG. 14b, when d1 = 400 µm, Loss2_{TE} = -0.038 dB, and Loss2_{TM} = -0.028 dB. In addition, using d1 = 400 µm and d2 = 300 µm as an example, the second loss Loss2 is further optimized by changing the tip width TW of the second waveguide 310. As shown in FIG. 14c, a horizontal axis TW represents the tip width of the second waveguide 310, a vertical axis Loss2 represents the second loss, and different line types represent a second loss Loss2_{TE} for the TE mode and a second loss Loss2_{TM} for the TM mode. In conclusion, when d2 = 300 µm, the tip width of the second waveguide 310 TW = 40 nm, and d1 = 400 µm, it is obtained through simulation that the coupling loss that is of the edge coupler and that corresponds to the TE mode is Loss_{TE} = Loss1_{TE} + Loss2_{TE} = -0.077 dB, and the coupling loss that is of the edge coupler and that corresponds to the TM mode is Loss_{TM} = Loss1_{TM} + Loss2_{TM} = -0.080 dB. It may be understood that, when IB = 1.5, d1 = 400 µm, d2 = 300 µm, and the tip width TW of the second waveguide 310 = 40 nm, a corresponding coupling loss is a minimum loss of the current structure.

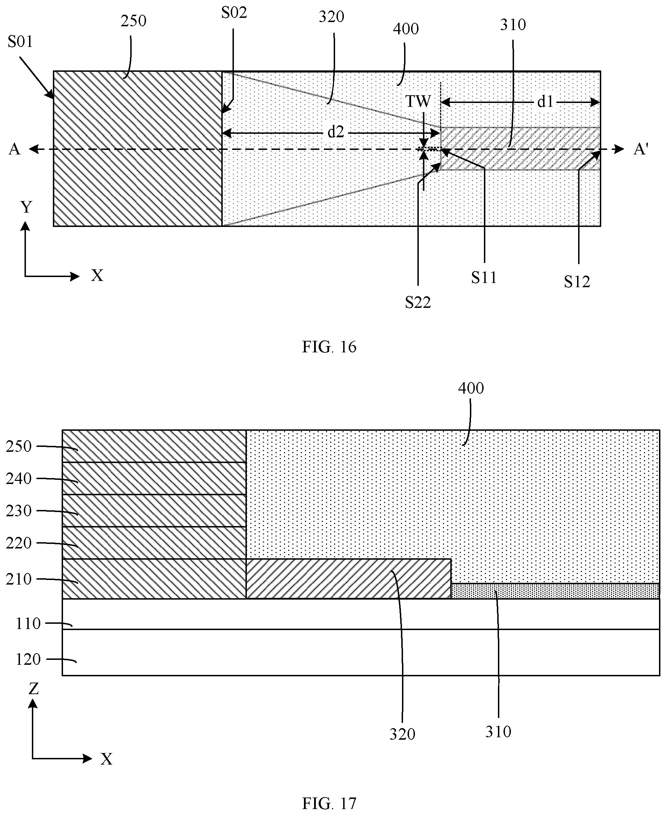

FIG. 15 is a diagram of a three-dimensional structure of an edge coupler according to another embodiment of this application. FIG. 16 is a top view of the structure of the edge coupler in FIG. 15. FIG. 17 is a sectional view of the structure along a dashed line AA' in FIG. 16. With reference to FIG. 15 to FIG. 17, the edge coupler may include a substrate 100, a gradient index lens 200 located on the substrate 100, a second waveguide 310, a first waveguide 320, and a cladding layer 400. A difference between this embodiment and the embodiment shown in FIG. 11 lies in that a third waveguide 330 and a fourth waveguide 340 are not provided in this embodiment. In other words, a second side S12 of the second waveguide 310 is directly connected to an optical waveguide in an optoelectronic chip, so that the optical signal is directly coupled to the optical waveguide from the second waveguide 310. Other content in this embodiment may be basically the same as content in the embodiment shown in FIG. 11. Details are not described herein.

The structure of the edge coupler shown in FIG. 15 is used as an example. For a flowchart of a corresponding preparation method, refer to FIG. 6. In step S10, the third waveguide 330 does not need to be formed by etching, and in step S20, the fourth waveguide 340 does not need to be formed by etching. For remaining preparation processes, refer to descriptions of the foregoing preparation method. Details are not described herein.

An embodiment of this application further provides a communication system. The communication system includes an optical fiber, an optoelectronic chip, and the edge coupler according to embodiments of this application. An end face of the optical fiber is connected to the first side of the gradient index lens in the edge coupler, and the second waveguide in the edge coupler is connected to an end face of an optical waveguide in the optoelectronic chip. In this way, a mode spot size at the end face of the optical fiber is reduced through the edge coupler and then coupled to the optical waveguide. Because the edge coupler has a low coupling loss, the communication system including the edge coupler also has a low coupling loss. In addition, a principle by which the communication system resolves the problem is similar to a principle by which the edge coupler resolves the problem. Therefore, for technical effects of the communication system, refer to the technical effects of the edge coupler. Details are not described again.

The foregoing descriptions are merely specific implementations of this application, but are not intended to limit the protection scope of this application. Any variation or replacement readily figured out by a person skilled in the art in the technical scope disclosed in this application shall fall within the protection scope of this application.

## Claims

1. An edge coupler, comprising a substrate, a waveguide structure located on the substrate, and a cladding layer wrapping the waveguide structure, wherein the waveguide structure comprises a gradient index lens, a first waveguide, and a second waveguide;
the gradient index lens has a first side and a second side that are opposite to each other in a first direction, the first side of the gradient index lens is configured to connect to an optical fiber, and the first direction is parallel to the substrate;
the first waveguide is located on the second side of the gradient index lens and is in contact with the second side of the gradient index lens, the first waveguide extends along the first direction, and an area of a cross section of the first waveguide gradually decreases along a direction from the gradient index lens toward the first waveguide; and
the second waveguide is located on the second side of the gradient index lens and is in contact with the first waveguide, the second waveguide extends along the first direction, an area of a cross section of the second waveguide gradually increases along the direction from the gradient index lens toward the first waveguide, a side that is of the second waveguide and that is away from the gradient index lens is configured to connect to an optical waveguide in an optoelectronic chip, and a refractive index of the first waveguide is less than a refractive index of the second waveguide.

2. The edge coupler according to claim 1, wherein the first waveguide wraps the second waveguide, and a length of the first waveguide in the first direction is the same as a length of the second waveguide in the vertical direction.

3. The edge coupler according to claim 1, wherein the second waveguide is located on a side that is of the first waveguide and that is away from the gradient index lens, and the second waveguide is in contact with the side that is of the first waveguide and that is away from the gradient index lens.

4. The edge coupler according to claim 1 or 2, wherein the waveguide structure further comprises a third waveguide extending along the first direction, the third waveguide is in contact with the side that is of the second waveguide and that is away from the gradient index lens, and a side that is of the third waveguide and that is away from the gradient index lens is configured to connect to the optical waveguide in the optoelectronic chip; and
an area of a cross section of the third waveguide stays the same along the direction from the gradient index lens toward the first waveguide.

5. The edge coupler according to claim 4, wherein the waveguide structure further comprises a fourth waveguide extending along the first direction, and the fourth waveguide is in contact with the side that is of the first waveguide and that is away from the gradient index lens; and
the fourth waveguide wraps the third waveguide when the first waveguide wraps the second waveguide; or
the fourth waveguide wraps the second waveguide and the third waveguide when the second waveguide is located on the side that is of the first waveguide and that is away from the gradient index lens.

6. The edge coupler according to claim 5, wherein an area of a cross section of the fourth waveguide stays the same along the direction from the gradient index lens toward the first waveguide.

7. The edge coupler according to any one of claims 4 to 6, wherein the third waveguide and the second waveguide are an integrally formed structure and are made of a same material; and/or
the fourth waveguide and the first waveguide are an integrally formed structure and are made of a same material.

8. The edge coupler according to any one of claims 1 to 7, wherein the first waveguide comprises a tapered waveguide; and/or
the second waveguide comprises a tapered waveguide; and/or
the third waveguide comprises a rectangular waveguide; and/or
the fourth waveguide comprises a rectangular waveguide.

9. The edge coupler according to any one of claims 1 to 8, wherein the gradient index lens comprises a plurality of light-transmitting layers stacked on the substrate, and refractive indexes of the plurality of light-transmitting layers are in descending order along a direction from the substrate toward the gradient index lens; and
first side faces of the plurality of light-transmitting layers in the first direction are used as the first side of the gradient index lens, and second side faces of the plurality of light-transmitting layers in the first direction are used as the second side of the gradient index lens.

10. The edge coupler according to claim 9, wherein the first waveguide is in contact with a light-transmitting layer that is in the gradient index lens and that is in contact with the substrate, and the refractive index of the first waveguide is the same as a refractive index of the light-transmitting layer that is in the gradient index lens and that is in contact with the substrate.

11. The edge coupler according to claim 10, wherein the first waveguide and the light-transmitting layer that is in the gradient index lens and that is in contact with the substrate are an integrally formed structure and are made of a same material.

12. The edge coupler according to any one of claims 1 to 11, wherein a material of the first waveguide comprises oxynitride;
a material of the second waveguide comprises silicon;
a material of the cladding layer comprises oxide; and
a material of the light-transmitting layers in the gradient index lens comprises oxynitride.

13. A preparation method for an edge coupler, comprising:
forming a second waveguide on a substrate, wherein the second waveguide extends along a first direction, an area of a cross section of the second waveguide gradually increases along the first direction, the second waveguide is configured to connect to an optical waveguide in an optoelectronic chip, and the first direction is parallel to the substrate;
forming a gradient index lens and a first waveguide on the substrate, wherein the gradient index lens has a first side and a second side that are opposite to each other in the first direction, the first side of the gradient index lens is configured to connect to an optical fiber, the second waveguide is in contact with the first waveguide, the first waveguide is in contact with the second side of the gradient index lens, the second waveguide extends along the first direction, and an area of a cross section of the second waveguide gradually decreases along the first direction; and
depositing a cladding layer on the substrate, wherein the cladding layer wraps the gradient index lens, the first waveguide, and the second waveguide.

14. The preparation method according to claim 13, further comprising: forming a third waveguide when forming the second waveguide, wherein the third waveguide extends along the first direction, the third waveguide is in contact with a side that is of the second waveguide and that is away from the gradient index lens, a side that is of the third waveguide and that is away from the gradient index lens is configured to connect to the optical waveguide in the optoelectronic chip, and an area of a cross section of the third waveguide stays the same along a direction from the gradient index lens toward the first waveguide; and
the cladding layer further wraps the third waveguide.

15. The preparation method according to claim 14, wherein the preparation method further comprises: forming a fourth waveguide when forming the first waveguide, wherein the fourth waveguide extends along the first direction; the fourth waveguide is in contact with a side that is of the first waveguide and that is away from the gradient index lens; and the fourth waveguide wraps the third waveguide when the first waveguide wraps the second waveguide, or the fourth waveguide wraps the second waveguide and the third waveguide when the second waveguide is located on the side that is of the first waveguide and that is away from the gradient index lens; and
the cladding layer further wraps the fourth waveguide.

16. The preparation method according to any one of claims 13 to 15, wherein the preparation method comprises:
providing a silicon-on-insulator substrate, wherein the silicon-on-insulator substrate comprises a base silicon, a buried oxide layer, and a top silicon; and
patterning and etching the top silicon to form the second waveguide; and
forming the gradient index lens and the first waveguide on the substrate comprises:
depositing a plurality of silicon oxynitride film layers on the buried oxide layer on which the second waveguide is formed, wherein refractive indexes of the plurality of silicon oxynitride film layers are in descending order along a direction from the base silicon toward the buried oxide layer;
patterning and etching a remaining silicon oxynitride film layer among the plurality of silicon oxynitride film layers to form a remaining light-transmitting layer in the gradient index lens, wherein the remaining silicon oxynitride film layer is a silicon oxynitride film layer among the plurality of silicon oxynitride film layers except a silicon oxynitride film layer in contact with the buried oxide layer; and
patterning and etching the silicon oxynitride film layer in contact with the buried oxide layer to form the first waveguide and a light-transmitting layer that is in the gradient index lens and that is in contact with the buried oxide layer.

17. A communication system, comprising an optical fiber, an optoelectronic chip, and the edge coupler according to any one of claims 1 to 12, wherein
an end face of the optical fiber is connected to the first side of the gradient index lens in the edge coupler, and the second waveguide in the edge coupler is connected to an end face of an optical waveguide in the optoelectronic chip.
